(19) Europäisches Patentamt
European Patent Office
Office européen des brevets

(11) **EP 4 607 679 A1**

(12) **EUROPEAN PATENT APPLICATION**
published in accordance with Art. 153(4) EPC

(43) Date of publication:
**27.08.2025 Bulletin 2025/35**

(21) Application number: **23937155.2**

(22) Date of filing: **28.07.2023**

(51) International Patent Classification (IPC):
**H01M 50/367** *(2021.01)*    **H01M 50/593** *(2021.01)*
**H01M 50/586** *(2021.01)*

(52) Cooperative Patent Classification (CPC):
**Y02E 60/10**

(86) International application number:
**PCT/CN2023/109917**

(87) International publication number:
**WO 2024/234479 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.05.2023 CN 202321141617 U**

(71) Applicant: **Contemporary Amperex Technology
Co., Limited
Ningde, Fujian 352100 (CN)**

(72) Inventors:
• **WU, Kai
Ningde, Fujian 352100 (CN)**
• **LI, Yao
Ningde, Fujian 352100 (CN)**
• **LIU, Sike
Ningde, Fujian 352100 (CN)**
• **CHEN, Shilong
Ningde, Fujian 352100 (CN)**
• **GU, Mingguang
Ningde, Fujian 352100 (CN)**

(74) Representative: **Laufhütte, Dieter
Lorenz Seidler Gossel
Rechtsanwälte Patentanwälte
Partnerschaft mbB
Widenmayerstraße 23
80538 München (DE)**

(54) **BATTERY CELL, BATTERY, AND ELECTRICAL DEVICE**

(57)    Provided in the present application are a battery cell (10), a battery (100), and an electrical device. The electrical device comprises a battery (100). The battery (100) comprises a battery cell (10). The battery cell (10) comprises an outer housing (12), an electrode assembly (11), and an insulating member (13). The end of the outer housing (12) in the first direction (Z) is provided with a pressure relief mechanism (123). The insulating member (13) is provided in the outer housing (12) and is located at the end of the electrode assembly (11) near the pressure relief mechanism (123). In a direction intersecting the first direction (Z), a pressure relief gap (101) is provided between a side portion of the insulating member (13) and the outer housing (12). A pressure relief recess (102) in communication with the pressure relief gap (101) is disposed on the side portion of the insulating member (13). A pressure relief channel (103) that is in communication with the pressure relief recess (102) and disposed opposite to the pressure relief mechanism (123) is also provided in the outer housing (12). In this way, the problem of damage or even explosion of the electrode assembly (11) due to the pressure of the electrode assembly (11) not being released in time can be solved.

FIG. 5

# Description

## CROSS-REFERENCE

The present application claims priority to Chinese Patent Application No. 202321141617.6 filed with China National Intellectual Property Administration on May 12, 2023 and entitled "Battery Cell, Battery, and Electric Device", which is incorporated herein by reference in its entirety.

## TECHNICAL FIELD

The present application relates to the technical field of batteries, and in particular, to a battery cell, a battery, and an electric device.

## BACKGROUND

In the related art, a battery cell includes an electrode assembly, a housing body, an end cover, and an insulating member. The electrode assembly and the insulating member are both accommodated in an interior environment defined by the housing and end cover. The insulating member is disposed between the electrode assembly and the end cover to insulate the electrode assembly from the end cover.

In some cases, when the electrode assembly experiences thermal runaway, high-temperature and high-pressure gas will appear at the side portion of the electrode assembly. The high-temperature and high-pressure gas at the side portion of the electrode assembly is difficult to be released to a pressure relief mechanism at the end cover timely, such that the pressure in the battery cell is difficult to be released timely, which is likely to result in damage or even explosion of the electrode assembly.

## SUMMARY

In view of the above problem, embodiments of the present application provide a battery cell, a battery, and an electric device, which can ameliorate the technical problem of difficulties in timely releasing the gas at the side portion of the electrode assembly.

Technical solutions employed in the embodiments of the present application are as follows.

In a first aspect, an embodiment of the present application provides a battery cell. The battery cell includes:

a housing provided with a pressure relief mechanism at an end in a first direction;
an electrode assembly disposed in the housing; and
an insulating member disposed in the housing and located at an end of the electrode assembly proximal to the pressure relief mechanism, where in a direction intersecting with the first direction, a pressure relief gap is provided between a side portion of the insulating member and the housing, the insulating member is provided, at the side portion, with a pressure relief slot in communication with the pressure relief gap, and the housing is provided therein with a pressure relief channel in communication with the pressure relief slot and disposed opposite to the pressure relief mechanism.

In the battery cell provided in the embodiments of the present application, in the direction intersecting with the first direction, the pressure relief gap is provided between the side portion of the insulating member and the housing, the insulating member is provided with the pressure relief slot at the side portion, the housing is provided therein with the pressure relief channel opposite to the pressure relief mechanism, and the pressure relief slot is in communication with the pressure relief gap and the pressure relief channel. In this way, when the electrode assembly experiences thermal runaway, the high-temperature and high-pressure gas at the side portion of the electrode assembly can sequentially pass through the pressure relief gap and the pressure relief slot to flow to the pressure relief channel and thus to the pressure relief mechanism, such that the gas can be released through the pressure relief mechanism. In such a configuration, the high-temperature and high-pressure gas at the side portion of the electrode assembly can be released to the pressure relief mechanism timely to achieve timely pressure relief, which can ameliorate the problem of damage or even explosion of the electrode assembly caused by the difficulties in timely pressure relief of the electrode assembly.

In some embodiments, the pressure relief channel is provided penetrating through the insulating member in the first direction.

In such a configuration, the release of the high-temperature and high-pressure gas can be effectively achieved to achieve timely pressure relief of the battery cell.

In some embodiments, the insulating member includes a body part and a first protrusion connected to the body part, where the first protrusion extends beyond the body part in the first direction; the pressure relief gap includes a first gap provided between the first protrusion and the housing, the pressure relief slot includes a first slot provided in the first protrusion and in communication with the first gap, the pressure relief channel includes a first channel provided in the first protrusion, and the first channel is in communication with the first slot and is opposite to the pressure relief mechanism.

In such a configuration, the release path of the high-temperature and high-pressure gas can be shortened to quickly realize the pressure relief of the high-temperature and high-pressure gas, thereby ameliorating the problem of difficulties in timely releasing the high-temperature and high-pressure gas caused by the first protrusion blocking the high-temperature and high-pressure gas.

In some embodiments, the first protrusion and the body part are sequentially disposed in a second direction; in a third direction, the first gap is provided between a side portion of the first protrusion and the housing, and the first protrusion is provided with the first slot at the side portion; the first direction, the second direction, and the third direction intersect with each other, and the first direction, the second direction, and the third direction are not in a same plane.

In such a configuration, the release of the high-temperature and high-pressure gas at the side portion of the electrode assembly in the third direction can be effectively achieved to achieve timely pressure relief of the battery cell.

In some embodiments, the first protrusion includes:

two first walls spaced apart from each other on the body part in the second direction to form the first channel, the first slot being formed in side portions of the two first walls in the third direction.

By forming the first channel by the two first walls' being spaced apart from each other in the second direction, the first channel may be provided penetrating through the insulating member in the first direction, and the first channel has a larger dimension in a cross section perpendicular to the first direction, which facilitates the high-temperature and high-pressure gas's passing through the first channel to flow to the pressure relief mechanism and thereby to achieve timely pressure relief of the battery cell. Also, the ends of the two first walls in the third direction may be spaced apart to form the first slot, such that the first slot has a large dimension, which also facilitates the passing of the high-temperature and high-pressure gas at the side portion of the electrode assembly in the third direction through the first gap and the first slot to enter the first channel, thus facilitating the timely pressure relief of the electrode assembly.

In some embodiments, the first protrusion further includes:

a second wall disposed between the two first walls and at the side portions of the first walls in the third direction, the first walls and the second wall defining the first channel, and the first slot being formed in the second wall.

With the technical solution described above, the second wall is provided between the two first walls, and the first slot is formed in the second wall. As such, the insulating film may extend to the second wall to be fixed to the second wall, such that the insulating film remains in the standing state, thereby maintaining the insulation effect between the electrode assembly and the housing.

In some embodiments, the first protrusion further includes a third wall, the third wall being disposed between the two first walls and opposite to the pressure relief mechanism; the first channel includes:

a first space in communication with the first slot and opposite to the pressure relief mechanism, the first walls and a side of the third wall distal to the electrode assembly in the first direction defining the first space; and

second slots penetrating through the third wall in the first direction and in communication with the first space.

In such a configuration, the high-temperature and high-pressure gas can be buffered in the first space and then flow to the pressure relief mechanism, allowing the high-temperature and high-pressure gas in the battery cell to rush out through the pressure relief mechanism to realize pressure relief.

In some embodiments, the third wall is disposed at ends of the first walls facing the electrode assembly in the first direction and is configured to abut against the electrode assembly in the first direction.

With the technical solution described above, the third wall may abut against the electrode assembly in the first direction. As such, the area of the first protrusion for contact with the electrode assembly can be increased, such that the first protrusion can abut against the electrode assembly very stably, thus fixing the electrode assembly in the housing and allowing for reduced damages to the electrode assembly caused by the first protrusion.

In some embodiments, the body part includes a plurality of sub-parts sequentially disposed in the second direction, and the first protrusion is disposed between two adjacent sub-parts.

In such a configuration, the first protrusion is disposed in the middle of the body part in the second direction, and the first protrusion is thus directly opposite to the middle of the electrode assembly in the second direction. As such, the high-temperature and high-pressure gas generated by the electrode assembly can quickly flow to the first channel to be released through the pressure relief mechanism. This helps to achieve the effect of timely pressure relief of the battery cell.

In some embodiments, the first slot and the first protrusion satisfy the following relationship:

$$S1 \geq S2 \times 1/6,$$

where on one of the side surfaces of the first protrusion in the third direction, S1 is an area of the first slot, and S2 is an area of the first protrusion.

By setting $S1 \geq S2 \times 1/6$, the area of the first slot is not too small, such that the first slot can allow the high-temperature and high-pressure gas to flow through timely, which facilitates the high-temperature and high-pressure gas' entering the first channel through the first slot for pressure relief.

In some embodiments, $S1 \geq S2 \times 1/2$.

By setting $S1 \geq S2 \times 1/2$, the first slot can have a large area proportion on the first protrusion, such that the effect of rapid release of the high-temperature and high-pressure gas at the side portion of the electrode assembly to the pressure relief mechanism can be achieved.

In some embodiments, the first protrusion is disposed on a side portion of the body part in the second direction; in the second direction, the first gap is provided between a side portion of the first protrusion distal to the body part and the housing, and the first protrusion is provided with the first slot at the side portion; the first direction intersects with the second direction.

In such a configuration, the high-temperature and high-pressure gas on the side portion of the electrode assembly in the second direction can sequentially pass through the first gap and the first slot to enter the first channel and thereby to flow to the pressure relief mechanism through the first channel. This enables the effect of timely release of the high-temperature and high-pressure gas at the side portion of the electrode assembly in the second direction to achieve timely pressure relief of the electrode assembly.

In some embodiments, the insulating member includes the body part and a second protrusion; in the first direction, the second protrusion is disposed on a side of the body part facing the electrode assembly, and the body part is spaced apart from the electrode assembly to form a second space in communication with the pressure relief channel; the pressure relief gap includes a second gap, and the pressure relief slot includes a third slot in communication with the second gap; in a direction intersecting with the first direction, the second protrusion is spaced apart from the housing to form the second gap, and the second protrusion is provided with the third slot in communication with the second space.

With the technical solution described above, in the case where there is high-temperature and high-pressure gas at the side portion of the electrode assembly in the direction intersecting with the first direction, the high-temperature and high-pressure gas can sequentially pass through the first gap and the second gap to flow to the pressure relief channel, or can pass through the second gap and the third slot to flow to the second space and then to the pressure relief channel, thus being released to the pressure relief mechanism. This helps to achieve the effect of timely pressure relief of the electrode assembly.

In some embodiments, the insulating member includes the body part and the first protrusion, and the first protrusion and the body part are sequentially disposed in the second direction; in the first direction, the first protrusion extends beyond the body part toward the electrode assembly, and the body part is spaced apart from the electrode assembly to form the second space in communication with the pressure relief channel; the pressure relief channel includes the first channel provided in the first protrusion and opposite to the pressure relief mechanism, and the first protrusion is provided, at a side portion in the second direction, with fourth slots in communication with the second space and the first channel; the first direction intersects with the second direction.

In such a configuration, the high-temperature and high-pressure gas at the side portion of the electrode assembly in the direction intersecting with the first direction can flow to the second space through a plurality of pathways, and thus flow to the first channel through the fourth slots to be released through the pressure relief mechanism, such that the battery cell has a plurality of channels that can release the high-temperature and high-pressure gas, which contributes to the timely pressure relief of the battery cell.

In some embodiments, the insulating member includes the body part, and the body part is spaced apart from the electrode assembly in the first direction to form the second space; the pressure relief channel includes a second channel, and the second channel includes:

a fifth groove provided on a side of the body part distal to the electrode assembly in the first direction and opposite to the pressure relief mechanism; and sixth slots penetrating through a bottom of the fifth groove in the first direction and in communication with the second space.

In such a configuration, the high-temperature and high-pressure gas in the second space may not only flow to the first channel through the fourth slots, but also flow to the sixth slots through the fifth groove, and is then released to the pressure relief mechanism. In this way, the high-temperature and high-pressure gas in the second space can be released to the pressure relief mechanism through a plurality of pathways, thus facilitating the timely pressure relief of the battery cell.

In a second aspect, an embodiment of the present application provides a battery. The battery includes a battery cell.

According to the battery provided in the embodiment of the present application, the use of the battery cell referred to above can ameliorate the problem of difficulties in timely releasing the high-temperature and high-pressure gas from the electrode assembly caused by the insulating member blocking the high-temperature and high-pressure gas, so as to ameliorate the problem of damage or even explosion of the electrode assembly caused by the difficulties in timely pressure relief of the electrode assembly, thereby imparting the battery the advantage of timely pressure relief.

In a third aspect, an embodiment of the present application provides an electric device. The electric device includes a battery cell or a battery.

According to the electric device provided in the embodiment of the present application, the use of the battery cell or battery referred to above can ameliorate the problem of difficulties in timely releasing the high-temperature and high-pressure gas from the electrode assembly caused by the insulating member blocking the high-temperature and high-pressure gas, so as to ameliorate the problem of damage or even explosion of the electrode assembly caused by the difficulties in timely pressure relief of the electrode assembly, thereby imparting the battery the advantage of timely pressure relief.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

BRIEF DESCRIPTION OF THE DRAWINGS

To more clearly illustrate the technical solutions in the embodiments of the present application, the drawings required for illustrating the embodiments or exemplary technology are briefly described below. Apparently, the drawings in the following description illustrate merely some embodiments of the present application, and those of ordinary skill in the art may still obtain other drawings based on these drawings without creative efforts.

FIG. 1 is a schematic diagram of a vehicle according to some embodiments of the present application;
FIG. 2 is a schematic exploded view of a battery according to some embodiments of the present application;
FIG. 3 is a schematic diagram of a battery cell according to some embodiments of the present application;
FIG. 4 is an exploded view of FIG. 3;
FIG. 5 is a schematic perspective view of an insulating member of the battery cell provided in FIG. 3;
FIG. 6 is a partial enlarged view of FIG. 5;
FIG. 7 is a cross-sectional view of FIG. 3 along line A-A;
FIG. 8 is an enlarged view of part B in FIG. 7;
FIG. 9 is a schematic perspective view of an insulating member of a battery cell according to some other embodiments of the present application;
FIG. 10 is a cross-sectional view of the battery cell where the insulating member provided in FIG. 9 is located;
FIG. 11 is an enlarged view of part C in FIG. 10;
FIG. 12 is an enlarged view of part D in FIG. 10; and
FIG. 13 is a partial enlarged view of FIG. 9.

Reference numerals in the drawings have the following meanings:
1000-vehicle; 100-battery; 200-controller; 300-motor; 10-battery cell; 20-case; 21-first part; 22-second part; 101-pressure relief gap; 1011-first gap; 1012-second gap; 102-pressure relief slot; 1021-first slot; 1022-third slot; 103-pressure relief channel; 1031-first channel; 10311-first space; 10312-second slot; 1032-second channel; 10321-fifth groove; 10322-sixth slot; 104-second space; 105-fourth slot; 11-electrode assembly; 12-housing; 121-housing body; 122-end cover; 123-pressure relief mechanism; 13-insulating member; 131-body part; 1311-sub-part; 132-first protrusion; 1321-first wall; 1322-second wall; 1323-third wall; 133-second protrusion; 14-insulating film; Z-first direction; Y-second direction; X-third direction.

DETAILED DESCRIPTION

The embodiments of the present application are described in detail hereinafter, with examples of the embodiments illustrated in the drawings. Throughout the drawings, the same or similar reference numbers indicate the same or similar elements or elements having the same or similar functions. The embodiments described hereinafter with reference to the drawings are exemplary and are intended to explain the present disclosure. They should not be construed as limiting the present disclosure.

In the description of the present application, it should be understood that the terms "length", "width", "upper", "lower", "front", "rear", "left", "right", "vertical", "horizontal", "top", "bottom", "inner", "outer", and the like indicate orientations or positional relationships based on those shown in the drawings. They are merely for the convenience of describing the present application and simplifying the description, rather than indicating or implying that the apparatus or element referred to must have a specific orientation or be constructed and operate in the specific orientation, and thus should not be construed as a limitation to the present application.

In addition, the terms "first" and "second" are used for descriptive purposes only and should not be construed as indicating or implying relative importance or implicitly indicating the number of technical features described. Therefore, a feature defined with "first" or "second" may explicitly or implicitly include one or more such a feature.

In the description of the present application, "a plurality of" means no less than two, and "no less than two" includes two, unless otherwise specifically defined. Correspondingly, "a plurality of groups" means no less than two groups.

In the description of the present application, unless otherwise clearly specified and defined, the terms "mount", "interconnect", "connect", "fix", and the like should be interpreted in their broad senses. For example, "connect" may be "fixedly connect", "detachably connect", or "integrally connect"; "mechanically connect" or "electrically connect"; or "directly interconnect", "indirectly interconnect through an intermediate", "communication between interiors of two elements", or "interaction between two elements". For those of ordinary skill in the art, the specific meanings of the aforementioned terms in the present application can be understood according to specific conditions.

In the description of the present application, the term "and/or" is merely a way to describe the associative relationship between associated objects, indicating that there are three possible relationships. For example, "A and/or B" may denote: the presence of A alone, the presence of both A and B, and the presence of B alone. In addition, the character "/" herein generally indicates an "or" relationship between the associated objects before and after the "/".

Although the present application has been described with reference to preferred embodiments, various modifications can be made and components can be replaced with equivalents without departing from the scope of the present application. In particular, the technical features mentioned in the embodiments may be combined in any manner as long as there are no structural conflicts. The present application is not limited to the specific embodiments disclosed herein, but encompasses all technical solutions falling within the scope of the claims.

In the related art, a battery cell includes an electrode assembly, a housing body, an end cover, and an insulating member. The electrode assembly and the insulating member are both accommodated in an interior environment defined by the housing and end cover. The insulating member is disposed between the electrode assembly and the end cover to insulate the electrode assembly from the end cover.

In some cases, when the electrode assembly experiences thermal runaway, high-temperature and high-pressure gas will appear at the side portion of the electrode assembly. The high-temperature and high-pressure gas at the side portion of the electrode assembly is difficult to be released to a pressure relief mechanism at the end cover timely, such that the pressure in the battery cell is difficult to be released timely, which is likely to result in damage or even explosion of the electrode assembly.

Illustratively, in some cases, the insulating member has a protrusion formed through the protruding of a side thereof facing the electrode assembly. The protrusion is configured to abut against and hold an end of the electrode assembly to fix the electrode assembly. However, when the electrode assembly experiences thermal runaway, high-temperature and high-pressure gas at the side portion of the electrode assembly is blocked by the protrusion, making it difficult to release the high-temperature and high-pressure gas from the insulating member to a pressure relief mechanism timely and thereby causing hysteresis in the pressure relief of the electrode assembly.

In view of the above, embodiments of the present application provide a battery cell, a battery, and an electric device. In a direction intersecting with a first direction, a pressure relief gap is provided between the side portion of the insulating member and the housing, the insulating member is provided with a pressure relief slot at the side portion, the housing is provided therein with a pressure relief channel opposite to the pressure relief mechanism, and the pressure relief slot is in communication with the pressure relief gap and the pressure relief channel. In this way, when the electrode assembly experiences thermal runaway, the high-temperature and high-pressure gas at the side portion of the electrode assembly can sequentially pass through the pressure relief gap and the pressure relief slot to flow to the pressure relief channel and thus to the pressure relief mechanism, such that the gas can be released through the pressure relief mechanism. In such a configuration, the high-temperature and high-pressure gas at the side portion of the electrode assembly can be released to the pressure relief mechanism timely to achieve timely pressure relief, which can ameliorate the problem of damage or even explosion of the electrode assembly caused by the difficulties in timely pressure relief of the electrode assembly.

In some embodiments, the battery cell referred to in the embodiments of the present application can be used in electric devices that use battery cells or batteries as their power source, and the battery referred to in the embodiments of the present application can be used in electric devices that use batteries as their power source.

The electric device may be, but is not limited to, a mobile phone, a tablet, a laptop computer, an electric toy, an electric tool, an electric bike, an electric car, a ship, a spacecraft, and the like. The electric toy may include a stationary or mobile electric toy, such as a game console, an electric car toy, an electric ship toy, and an electric airplane toy, and the spacecraft may include an airplane, a rocket, a space shuttle, a spaceship, and the like. The vehicle may be a fuel vehicle, a gas vehicle, or a new energy vehicle. The new energy vehicle may be a pure electric vehicle, a hybrid vehicle, an extended-range vehicle, or the like.

In some embodiments, the battery cell and the battery referred to in the embodiments of the present application may also be used in an energy storage device. The energy storage device may be an energy storage container, an energy storage cabinet, or the like.

The battery referred to in the embodiments of the present application may be a single physical module including one or more battery cells to provide a higher voltage and capacity. When there are a plurality of battery cells, the plurality of battery cells are connected in series, in parallel, or in series-parallel by a busbar component. The series-parallel connection means that both series connection and parallel connection are present for the connection among the plurality of battery cells.

In some embodiments, the battery may be a battery module. When there are a plurality of battery cells, the plurality of battery cells are arranged and fixed to form a battery module. As an example, the plurality of battery cells may be fixed by a banding strap or the like to form a battery module. As an example, the plurality of battery cells may also be fixed by an end plate, a side plate, or the like to form a battery module.

In some embodiments, the battery may be a battery pack, which may include a case and battery cells.

As an example, the battery cells may be accommodated directly in the case. As an example, the battery cells may also be formed into a battery module before being accommodated in the case.

For ease of description, in the embodiments of the present application, the description is provided by taking a vehicle as an example of the electric device.

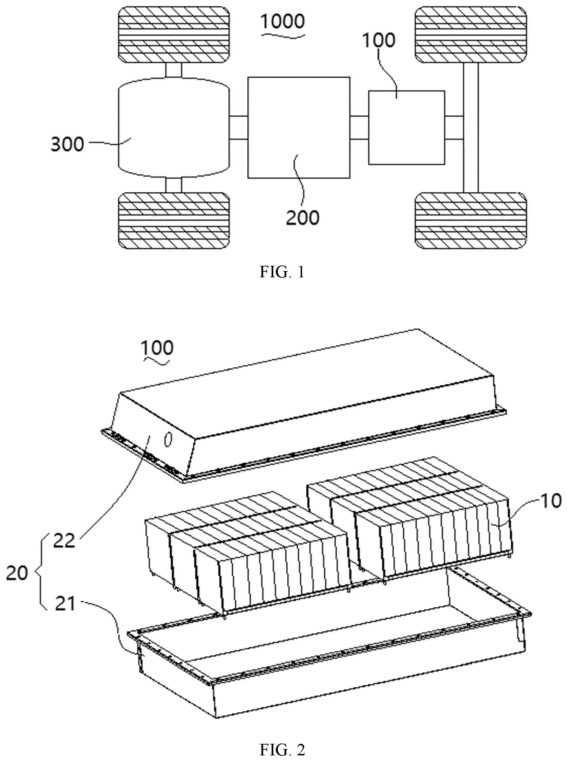

Referring to FIG. 1, FIG. 1 is a schematic diagram of a vehicle 1000 according to some embodiments of the present application. A battery 100 described above is provided inside the vehicle 1000, and the battery 100 may be disposed at the bottom, the head, or the tail of the vehicle 1000. The battery 100 may be configured to power the vehicle 1000. For example, the battery 100 may serve as an operation power source of the vehicle 1000. The vehicle 1000 may also include a controller 200 and a motor 300. The controller 200 is used for controlling the battery 100 to power the motor 300, e.g., for operation power needed by the vehicle 1000 for start-up, navigation, and driving.

In some embodiments, the battery 100 may not only serve as an operation power source for the vehicle 1000, but also as a driving power source for the vehicle 1000 to, instead of or in part instead of fuel or natural gas, provide driving power for the vehicle 1000.

Referring to FIG. 2, FIG. 2 is an exploded view of a battery 100 according to some embodiments of the present application. The battery 100 includes a case 20 and a plurality of battery cells 10. The case 20 is a structure having an accommodating space therein, and the case 20 may be of various structures. In some embodiments, the case 20 may include a first part 21 and a second part 22. The first part 21 and the second part 22 are mutually lidded with each other, and jointly define the above accommodating space. The first part 21 may be a hollow structure with one end open, and the second part 22 is a plate-like structure. The second part 22 lids the open side of the first part 21, such that the first part 21 and the second part 22 jointly define the above accommodating space. Alternatively, the first part 21 and the second part 22 may also each be a hollow structure with one end open, as shown in FIG. 2, and the open side of the first part 21 lids the open side of the second part 22, such that the first part 21 and the second part 22 jointly define the above accommodating space. The case 20 formed by the first part 21 and the second part 22 may be in various shapes such as cylindrical and rectangular parallelepiped.

In some embodiments, the plurality of battery cells 10 may be connected in series, in parallel, or in series-parallel as an integrated unit, and then the integrated unit formed by the plurality of battery cells 10 is directly accommodated in the above accommodating space of the case 20, as shown in FIG. 2. The plurality of battery cells 10 may also be first connected in series, in parallel, or in series-parallel and then arranged and fixed to form a plurality of battery modules, the plurality of battery modules are then connected in series, in parallel, or in series-parallel to form an integrated unit, and then the integrated unit is accommodated in the above accommodating space of the case 20.

In some embodiments, referring to FIGs. 1 and 2, when the battery 100 is applied to the vehicle 1000, the case 20 of the battery 100 may be part of the chassis structure of the vehicle 1000. For example, a part of the case 20 may be at least a part of the chassis of the vehicle 1000, or a part of the case 20 may be at least a part of a transverse beam and a longitudinal beam of the vehicle 1000.

The battery cell 10 refers to the smallest unit that stores and outputs electric energy. The battery cell 10 may be a secondary battery or a primary battery. The battery cell 10 may be, but is not limited to, a metal battery, a lithium sulfur battery, a sodium-ion battery, or a magnesium-ion battery. The battery cell 10 may be cylindrical, flat, rectangular parallelepiped, or in other shapes.

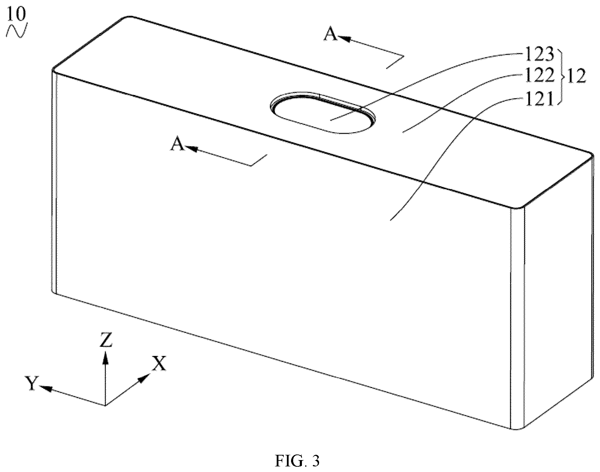

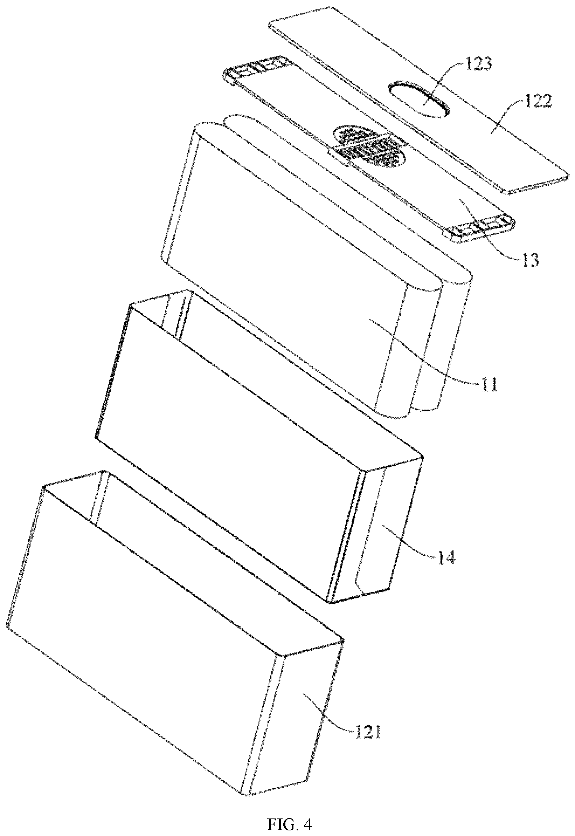

Referring to FIGs. 3 and 4 together, FIG. 3 is a schematic diagram of a battery cell 10 according to some embodiments of the present application, and FIG. 4 is an exploded view of FIG. 3. The battery cell 10 includes an electrode assembly 11 and a housing 12.

The electrode assembly 11 is a component where the electrochemical reaction occurs in the battery cell 10. The electrode assembly 11 is mainly formed by winding or stacking a positive electrode plate and a negative electrode plate, and a separator is provided between the positive electrode plate and the negative electrode plate. The portions of the positive electrode plate and the negative electrode plate that contain active substances form the main body of the electrode assembly 11, and the portions of the positive electrode plate and the negative electrode plate that do not contain active substances each form a tab. The tab of the positive electrode plate is a positive tab and the tab of the negative electrode plate is a negative tab. The positive electrode tab and the negative electrode tab may be located together at one end of the main body or respectively at two opposite ends of the main body.

In the battery cell 10, the number of electrode assemblies 11 may be one or more.

In some cases, the electrode assembly 11 may also be referred to as a bare cell, a wound body, a stack, etc.

In some embodiments, the battery cell 10 may further include an electrolyte that conducts ions between the positive electrode plate and the negative electrode plate. In the embodiments of the present application, the electrolyte may be liquid, gel, or solid.

The housing 12 includes a housing body 121 and an end cover 122. The housing body 121 and the end cover 122 are components for jointly defining the internal environment of the battery cell 10. The internal environment defined by the housing body 121 and the end cover 122 is used for accommodating the electrode assembly 11 and the electrolyte. The housing body 121 and the end cover 122 may be separate components. Specifically, the housing body 121 has an opening, the end cover 122 lids the opening of the housing body 121 to define the internal environment of the battery cell 10 together with the housing body 121 and to isolate the internal environment of the battery cell 10 from the external environment. The housing body 121 and the end cover 122 may also be of an integrated structure. Specifically, a common connection surface may be formed between the end cover 122 and the housing body 121 before the electrode assembly 11 is placed into the housing, and after the electrode assembly 11 is placed into the housing, the end cover 122 lids the housing body 121 when the electrode assembly 11 needs to be encapsulated.

The number of end covers 122 may be one. The number of end covers 122 may also be two, and the two end covers 122 are respectively disposed at two opposite ends of the housing body 121.

The housing body 121 may be cylindrical, square, etc., which may be determined depending on the specific shape and size of the electrode assembly 11. Also, the housing body 121 and the end cover 122 may be made of a variety of materials, such as copper, iron, aluminum, stainless steel, aluminum alloy, and plastic.

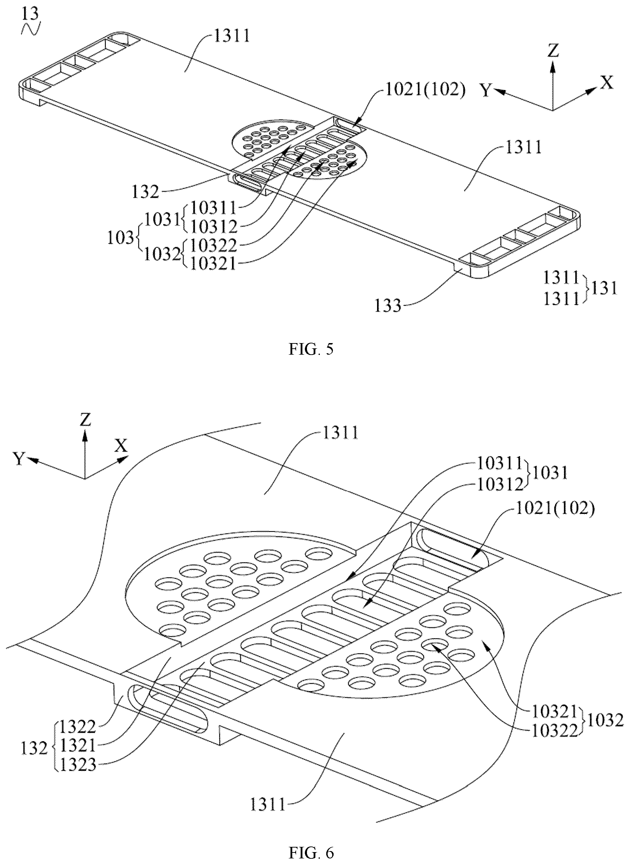

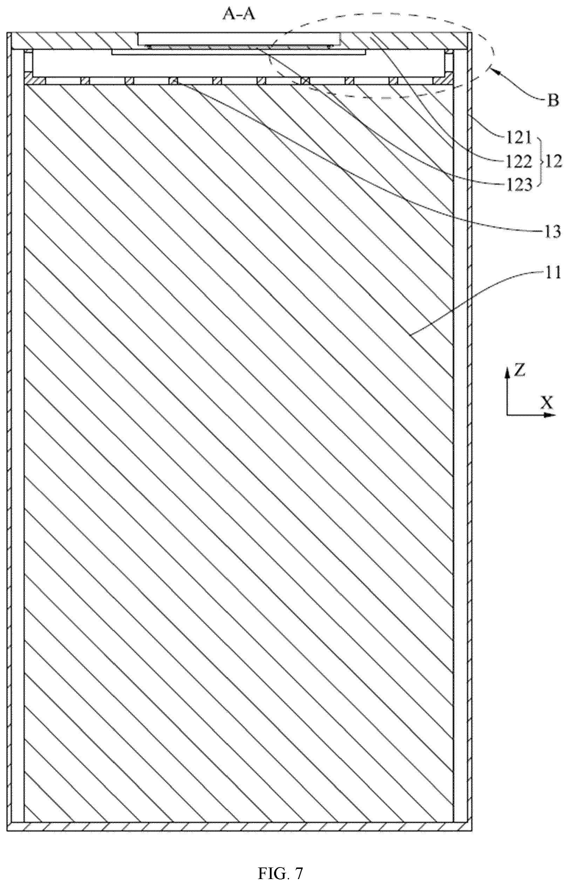

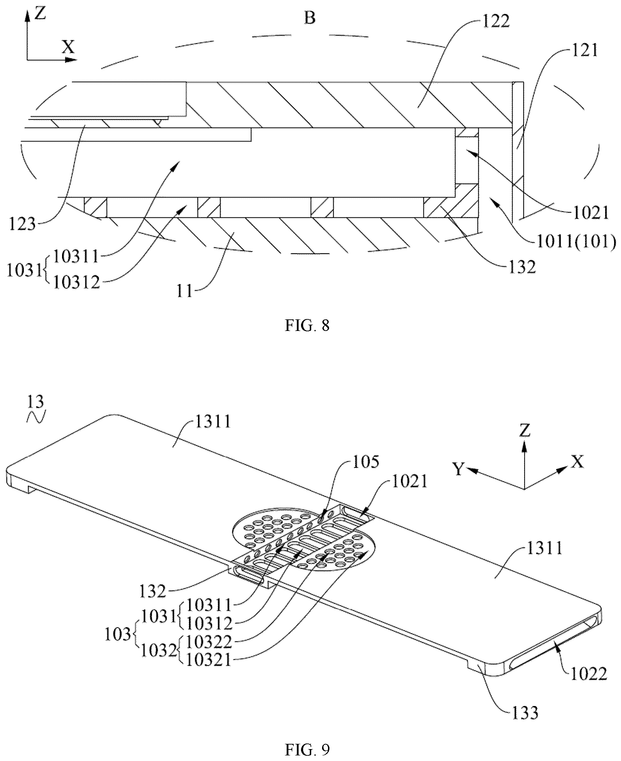

Referring to FIGs. 3-8 together and in combination with the other figures, FIG. 5 shows a schematic perspective view of an insulating member 13 according to some embodiments of the present application, FIG. 6 shows a partial enlarged view of FIG. 5, FIG. 7 shows a cross-sectional view of FIG. 3 along line A-A, and FIG. 8 is a partial enlarged view of FIG. 7. The battery cell 10 provided in the embodiments of the present application includes a housing 12, an electrode assembly 11, and an insulating member 13. The housing 12 provided with a pressure relief mechanism 123 at an end in the first direction Z. The electrode assembly 11 is disposed in the housing 12. The insulating member 13 is disposed in the housing 12 and is located at an end of the electrode assembly 11 proximal to the pressure relief mechanism 123. In a direction interacting with the first direction Z, a pressure relief gap 101 is provided between a side portion of the insulating member 13 and the housing 12, the insulating member 13 is provided with a pressure relief slot 102 at the side portion, and the pressure relief slot 102 is in communication with the pressure relief gap 101. The housing 12 is further provided therein with a pressure relief channel 103, and the pressure relief channel 103 is in communication with the pressure relief slot 102 and disposed opposite to the pressure relief mechanism 123.

The pressure relief mechanism 123 is a component capable of relieving the internal pressure of the battery cell 10 when the internal pressure or temperature of the battery cell 10 reaches a threshold value. For example, when the battery cell 10 operates normally, the gas pressure inside the battery cell 10 is smaller than the activation pressure value for the pressure relief mechanism 123, the pressure relief mechanism 123 is in an off state, and the gas inside the battery cell 10 is not in communication with the gas outside. When the battery cell 10 experiences thermal runaway under the actions of internal and external factors such as overcharge, overheat, and mechanical impact, a large amount of high-temperature and high-pressure gas is generated inside the battery cell 10, the pressure inside the battery cell 10 is greater than the activation pressure value for the pressure relief mechanism 123, the pressure relief mechanism 123 is changed from the off state to an on state, and the high-temperature and high-pressure gas inside the battery cell 10 can be discharged outside the battery cell 10 through the pressure relief mechanism 123.

The pressure relief mechanism 123 may be a weak structure disposed on the housing 12, or the pressure relief mechanism 123 may also be a pressure valve or the like. When the pressure relief mechanism 123 is a weak structure, the pressure relief mechanism 123 has a lower structural strength than other parts of the housing 12. In this way, in the event of the thermal runaway of the battery cell 10, the high-temperature and high-pressure gas generated by the battery cell 10 can break through the pressure relief mechanism 123 to be released outside the battery cell 10. As an example, the pressure relief mechanism 123 may be formed integrally with the housing 12. For example, the pressure relief mechanism 123 is a score provided in the housing 12. As an example, the pressure relief mechanism 123 may also be provided separately and connected to the housing 12.

The pressure relief mechanism 123 being disposed in the housing 12 may be that the pressure relief mechanism 123 is disposed in the housing body 121 or the pressure relief mechanism 123 is disposed on the end cover 122. As an example, as shown in FIGs. 3 and 4, the housing 12 includes a housing body 121 and an end cover 122. The end cover 122 is disposed at an end of the housing body 121 in the first direction Z, and the pressure relief mechanism 123 is disposed on the end cover 122.

The insulating member 13 refers to a component with insulating properties. Specifically, the insulating member 13 is located in the housing 12 and can insulate the electrode assembly 11 from the end of the housing 12 where the pressure relief mechanism 123 is provided. The insulating member 13 may be made of a material such as, but not limited to, plastic.

The insulating member 13 being located at the end of the electrode assembly 11 proximal to the pressure relief mechanism 123 means that the insulating member 13 is disposed at the end of the electrode assembly 11 facing toward the pressure relief mechanism 123 in the first direction Z. It may be appreciated that the insulating member 13 is disposed between the electrode assembly 11 and the pressure relief mechanism 123 in the first direction Z. In some possible designs, as shown in FIGs. 3 and 4, the housing 12 is provided with the pressure relief mechanism 123 at one end in the first direction Z. Correspondingly, the pressure relief mechanism 123 is disposed at one end of the electrode assembly 11 in the first direction Z. Based on this, in the first direction Z, the insulating member 13 is disposed between the electrode assembly 11 and the pressure relief mechanism 123. In some possible designs, the housing 12 is provided with a pressure relief mechanisms 123 at each of two opposite ends in the first direction Z. Correspondingly, the electrode assembly 11 has the pressure relief mechanism 123 at each of two opposite ends in the first direction Z. Based on this, the insulating member 13 may be disposed at either end of the electrode assembly 11 in the first direction Z. Alternatively, the electrode assembly 11 is provided with an insulating member 13 at each of two opposite ends in the first direction Z.

It should be noted that the housing 12 is provided with the pressure relief channel 103, and the pressure relief channel 103 is in communication with the pressure relief slot 102 and disposed opposite to the pressure relief mechanism 123 in the first direction Z. Based on this, the gas in the pressure relief channel 103 can flow to the pressure relief mechanism 123. In some possible designs, the insulating member 13 and the pressure relief mechanism 123 are spaced apart from each other to form the pressure relief channel 103 described above. In some possible designs, the pressure relief channel 103 described above is formed in the insulating member 13. In some possible designs, the pressure relief channel 103 described above is formed in the insulating member 13 and between the insulating member 13 and the pressure relief mechanism 123.

It should also be noted that the pressure relief gap 101 is provided between a side portion of the insulating member 13 in the direction intersecting with the first direction Z and an inner side wall of the housing 12. The insulating member 13 is provided with the pressure relief slot 102 at the side portion in the direction intersecting with the first direction Z, and the pressure relief slot 102 is in communication with the pressure relief gap 101. Based on this, the gas at the side portion of the insulating member 13 in the direction intersecting with the first direction Z can sequentially pass through the pressure relief gap 101 and the pressure relief slot 102 corresponding to the side portion and can thus flow to the pressure relief channel 103 and then to the pressure relief mechanism 123.

In some possible designs, the pressure relief gap 101 is provided between one side of the insulating member 13 in the direction intersecting with the first direction Z and the housing 12, and the pressure relief slot 102 is provided in the side of the insulating member 13 provided with the pressure relief gap 101 in the direction intersecting with the first direction Z. The pressure relief slot 102 is in communication with the pressure relief gap 101 on the corresponding side. In some possible designs, a pressure relief gap 101 is provided between each of two opposite sides of the insulating member 13 in the direction intersecting with the first direction Z and the housing 12, and the insulating member 13 is provided with a pressure relief slot 102 at each of two opposite sides in the direction intersecting with the first direction Z. The pressure relief slots 102 at the two opposite sides of the insulating member 13 are in communication with the pressure relief gaps 101 at two opposite sides of the insulating member 13 in one-to-one correspondence.

The above-mentioned "direction intersecting with the first direction Z" may be the second direction Y or the third direction X indicated in the figures. That is, the second direction Y intersects with the first direction Z, and the third direction X intersects with the first direction Z. It should be explained that the second direction Y intersecting with the first direction Z means that the first direction Z and the second direction Y have an included angle greater than 0° and less than 180° formed therebetween, that is, the first direction Z is not parallel to the second direction Y. The first direction Z and the second direction Y may be perpendicular or not be perpendicular to each other. The first direction Z and the second direction Y may be directions that intersect with each other in the same plane, or may be directions in two non-coplanar planes, respectively, and the projection of the second direction Y on the plane in which the first direction Z is located may intersect with the first direction Z. The intersecting of the first direction Z and the third direction X may also be interpreted in the same way and will not be repeated again herein. The first direction Z, the second direction Y, and the third direction X are not in the same plane. As an example, as shown in FIGs. 3-8, the first direction Z is perpendicular to the second direction Y, the first direction Z is perpendicular to the third direction X, and the second direction Y is perpendicular to the third direction X.

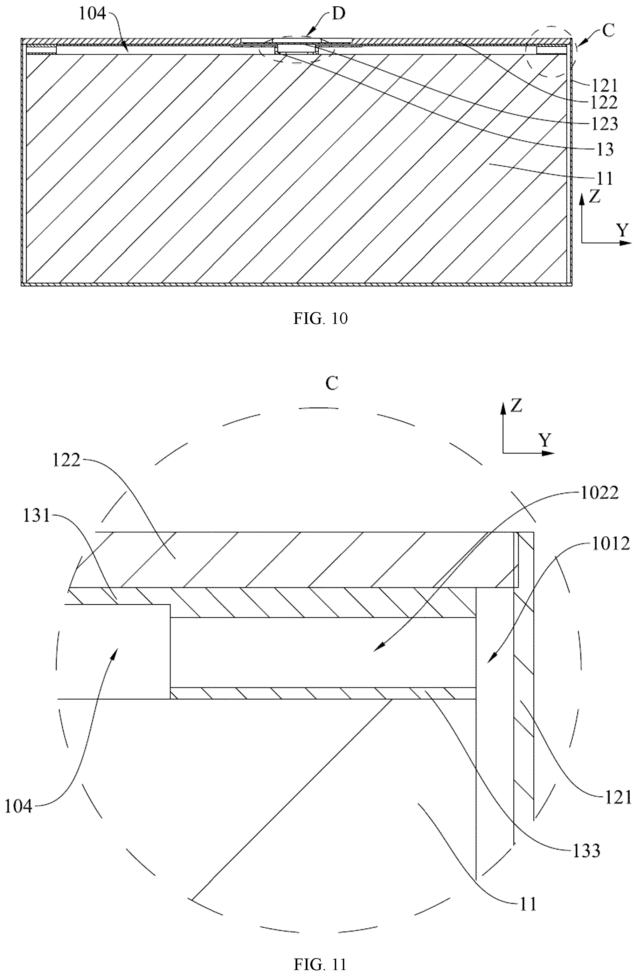

In some possible designs, as shown in FIGs. 7 and 8 and in combination with the other figures, a pressure relief gap 101 is provided between a side portion of the insulating member 13 in the second direction Y and an inner side wall of the housing 12 in the second direction Y, and the pressure relief gap 101 is a first gap 1011. The insulating member 13 is provided with a pressure relief slot 102 at the side portion in the second direction Y, such that the pressure relief slot 102 can communicate with the pressure relief gap 101. The pressure relief slot 102 is a first slot 1021. In some possible designs, as shown in FIGs. 10 and 11 and in combination with the other figures, a pressure relief gap 101 is provided between a side portion of the insulating member 13 in the third direction X and an inner side wall of the housing 12 in the third direction X, and the pressure relief gap 101 is a second gap 1012. The insulating member 13 is provided with a pressure relief slot 102 at the side portion in the third direction X, and the pressure relief slot 102 is a third slot 1022.

The first direction Z is shown as the direction Z in the figures. In some cases, the first direction Z is the height direction of the battery cell 10. In the case that the battery cell 10 is substantially square, as shown in FIG. 3, the second direction Y may be the width direction of the battery cell 10, and the third direction X may be the thickness direction of the battery cell 10. Certainly, the second direction Y may also be the thickness direction of the battery cell 10, and the third direction X may also be the width direction of the battery cell 10. In the case that the battery cell 10 is substantially cylindrical, the second direction Y and the third direction X may be two intersecting diametrical directions of the battery cell 10.

As shown in FIGs. 8 and 11, in the direction intersecting with the first direction Z, the side portion of the insulating member 13 is spaced apart from the inner side wall of the housing body 121 to form a pressure relief gap 101. Alternatively, in the direction intersecting with the first direction Z, the side portion of the insulating member 13 is spaced apart from an inner side wall of the end cover 122 to form a pressure relief gap 101. Alternatively, in the direction intersecting with the first direction Z, the side portion of the insulating member 13 is spaced apart from the inner side wall of the end cover 122 to form a pressure relief gap 101, and the side portion of the insulating member 13 is spaced apart from the inner side wall of the housing body 121 to form a pressure relief gap.

In the battery cell 10 provided in the embodiments of the present application, in the direction intersecting with the first direction Z, the pressure relief gap 101 is provided between the side portion of the insulating member 13 and the housing 12, the insulating member 13 is provided with the pressure relief slot 102 at the side portion, the housing 12 is provided therein with the pressure relief channel 103 opposite to the pressure relief mechanism 123, and the pressure relief slot 102 is in communication with the pressure relief gap 101 and the pressure relief channel 103. In the case of the thermal runaway of the electrode assembly 11, the high-temperature and high-pressure gas will be generated at the side portion of the electrode assembly 11 in the direction intersecting with the first direction Z, or the high-temperature and high-pressure gas generated by the electrode assembly 11 may flow to the side portion of the electrode assembly 11 in the direction intersecting with the first direction Z. As such, the high-temperature and high-pressure gas accumulates at the side portion of the electrode assembly 11 in the direction intersecting with the first direction Z, and the high-temperature and high-pressure gas at the side portion of the electrode assembly 11 can sequentially pass through the pressure relief gap 101 and the pressure relief slot 102 to flow to the pressure relief channel 103 and thus to the pressure relief mechanism 123, such that the gas can be released through the pressure relief mechanism 123. In such a configuration, providing the pressure relief gap 101, the pressure relief slot 102, and the pressure relief channel 103 enables the high-temperature and high-pressure gas at the side portion of the electrode assembly 11 to be released to the pressure relief mechanism 123 timely, so as to achieve timely pressure relief. As such, the problem of difficulties in timely releasing the high-temperature and high-pressure gas from the electrode assembly 11 caused by the insulating member 13 blocking the high-temperature and high-pressure gas can be ameliorated so as to ameliorate the problem of damage or even explosion of the electrode assembly 11 caused by the difficulties in timely pressure relief of the electrode assembly 11, thereby imparting the battery cell 10 the advantage of timely pressure relief, which can suppress the thermal runaway and explosion of the battery cell 10 to a certain extent.

In some embodiments, referring to FIG. 4, an insulating film 14 is wrapped outside the electrode assembly 11. The insulating film 14 is connected to the insulating member 13 to allow the insulating film 14 to remain in a standing state, thereby maintaining the insulation effect between the electrode assembly 11 and the housing 12.

In some embodiments, referring to FIGs. 5-8 together, the pressure relief channel 103 is provided penetrating through the insulating member 13 in the first direction Z.

In such a configuration, one of the ends of the pressure relief channel 103 in the first direction Z is opposite to the electrode assembly 11, and the other end of the pressure relief channel 103 in the first direction Z is opposite to the pressure relief mechanism 123. In this way, in the case of the thermal runaway of the battery cell 10, the high-temperature and high-pressure gas generated by the electrode assembly 11 can pass through the pressure relief channel 103 in the first direction Z and flow to the pressure relief mechanism 123 so as to be released to the outside of the battery cell 10 through the pressure relief mechanism 123. Moreover, the high-temperature and high-pressure gas at the side portion of the electrode assembly 11 can sequentially pass through the pressure relief gap 101 and the pressure relief slot 102 to flow to the pressure relief channel 103 and then flow to the pressure relief mechanism 123 in the first direction Z. As such, the release of the high-temperature and high-pressure gas can be effectively achieved to achieve timely pressure relief of the battery cell 10.

In some embodiments, referring to FIGs. 5-8 together and in combination with the other figures, the insulating member 13 includes a body part 131 and a first protrusion 132. The first protrusion 132 is connected to the body part 131 and the first protrusion 132 extends beyond the body part 131 in the first direction Z toward the electrode assembly 11. The pressure relief gap 101 includes a first gap 1011. The above first gap 1011 is provided between the first protrusion 132 and the housing 12. The pressure relief slot 102 includes a first slot 1021. The first protrusion 132 is provided with the above first slot 1021, and the first slot 1021 is in communication with the first gap 1011. The pressure relief channel 103 includes a first channel 1031. The first channel 1031 is provided in the first protrusion 132, and the first channel 1031 is in communication with the first slot 1021 and disposed opposite to the pressure relief mechanism 123.

The body part 131 and the first protrusion 132 each refer to a member made of an insulating material.

It may be appreciated that the first gap 1011 is provided between a side portion of the first protrusion 132 and the inner side wall of the housing 12 in the direction intersecting with the first direction Z. In the direction intersecting with the first direction Z, the first protrusion 132 is provided, at the side portion, with the first slot 1021 in communication with the first gap 1011. "The direction intersecting with the first direction Z" may be the second direction Y in the figures or the third direction X in the figures.

It may be appreciated that the first protrusion 132 is opposite to the pressure relief mechanism 123 in the first direction Z. The first channel 1031 of the pressure relief channel 103 is formed in the first protrusion 132, such that the first channel 1031 is opposite to the pressure relief mechanism 123 in the first direction Z.

In the case of the pressure relief channel 103 penetrating through the insulating member 13 in the first direction Z, the first channel 1031 may penetrate through the first protrusion 132 in the first direction Z, such that the first channel 1031 is opposite to the electrode assembly 11 in the first direction Z and opposite to the pressure relief mechanism 123 in the first direction Z.

In some possible designs, the first protrusion 132 extends beyond the body part 131 in the first direction Z toward the electrode assembly 11, such that the first protrusion 132 may press against the electrode assembly 11 in the first direction Z. In this way, the electrode assembly 11 can be stably fixed in the housing 12 under the action of the pressure from the first protrusion 132. In some possible designs, the first protrusion 132 may also not press against the electrode assembly 11, and instead is spaced apart from the electrode assembly 11. In this way, a gap between the electrode assembly 11 and the first protrusion 132 provides a buffer for the high-temperature and high-pressure gas from the electrode assembly 11, which in turn facilitates the release of the high-temperature and high-pressure gas through the electrode assembly 11 and the first protrusion 132 to the pressure relief mechanism 123, ameliorating the problem of prolonged accumulation of the high-temperature and high-pressure gas in the electrode assembly 11.

With the technical solution described above, the high-temperature and high-pressure gas at the side portion of the electrode assembly 11 in the direction intersecting with the first direction Z can enter the first slot 1021 of the first protrusion 132 through the first gap 1011 between the first protrusion 132 and the housing 12 and is then released to the pressure relief mechanism 123 through the first channel 1031 of the first protrusion 132. As such, the release path of the high-temperature and high-pressure gas can be shortened to quickly realize the pressure relief of the high-temperature and high-pressure gas, thereby ameliorating the problem of difficulties in timely releasing the high-temperature and high-pressure gas caused by the first protrusion 132 blocking the high-temperature and high-pressure gas.

In some embodiments, referring to FIGs. 5-8 together and in combination with the other figures, the first protrusion 132 and the body part 131 are sequentially disposed in the second direction Y. In the third direction X, the first gap 1011 is provided between the side portion of the first protrusion 132 and the housing 12, and the first protrusion 132 is provided with the first slot 1021 at the side portion. The first direction Z intersects with the second direction Y, the first direction Z intersects with the third direction X, and the second direction Y intersects with the third direction X.

The second direction Y is shown as the direction Y in the figures, and the third direction X is shown as the direction X in the figures.

The first protrusion 132 and the body part 131 being sequentially disposed in the second direction Y may be that the first protrusion 132 is provided in the middle of the body part 131 in the second direction Y, as shown in FIGs. 5 and 6, or it may also be that the first protrusion 132 is provided on the side portion of the body part 131 in the second direction Y, where specifically, the body part 131 is provided with a first protrusion 132 at one side or each of two opposite sides in the second direction Y.

A first gap 1011 is provided between one side or each of two opposite sides of the first protrusion 132 in the third direction X and the inner side wall of the housing 12, and the first protrusion 132 is provided with a first slot 1021 at one side or each of two opposite sides in the third direction X. Also, the first slot 1021 is in communication with the first gap 1011 and the first channel 1031 in the third direction X.

With the technical solution described above, the first gap 1011 and the first slot 1021 are provided at the side portion of the first projection in the third direction X, such that the high-temperature and high-pressure gas at the side portion of the electrode assembly 11 in the third direction X can sequentially pass through the first gap 1011 and the first slot 1021 to flow to the first channel 1031 and thus to the pressure relief mechanism 123. As such, the release of the high-temperature and high-pressure gas at the side portion of the electrode assembly 11 in the third direction X can be effectively achieved to achieve timely pressure relief of the battery cell 10.

In some embodiments, referring to FIGs. 5 and 6 together and in combination with the other figures, the first protrusion 132 includes two first walls 1321. The two first walls 1321 are spaced apart from each other on the body part 131 in the second direction Y to form the first channel 1031 in a spaced manner. The first slot 1021 is formed in side portions of the two first walls 1321 in the third direction X.

It may be appreciated that the two first walls 1321 are two opposite side walls of the first channel 1031 in the second direction Y. When the first protrusion 132 is disposed in the middle of the body part 131 in the second direction Y, the two first walls 1321 may be disposed directly on the body part 131. When the first protrusion 132 is disposed at an end of the body part 131 in the second direction Y, one of the first walls 1321 may be disposed directly on the body part 131 and the other first wall 1321 may be indirectly connected to the body part 131 by another component, such that the two first walls 1321 can be spaced apart in the second direction Y to form the first channel 1031.

When one side of the first protrusion 132 in the third direction X is spaced apart from the housing 12 to form the first gap 1011, one side of each of the two first walls 1321 in the third direction X is spaced apart from the housing 12 to form the first gap 1011. When each of the two opposite sides of the first protrusion 132 in the third direction X forms the first gap 1011 together with the housing 12, the two opposite sides of each of the two first walls 1321 in the third direction X are spaced apart from the housing 12 to form the first gaps 1011.

When the first protrusion 132 is provided with a first slot 1021 at one side in the third direction X, the first slot 1021 above is formed at one side of the two first walls 1321 in the third direction X. When the first protrusion 132 is provided with a first slot 1021 at each of two opposite sides in the third direction X, a first slot 1021 is formed at each of two opposite sides of the two first walls 1321 in the third direction X.

The first walls 1321 may abut against the electrode assembly 11 in the first direction Z, and the first walls 1321 may also be spaced apart from the electrode assembly 11 in the first direction Z.

By forming the first channel 1031 by the two first walls 1321's being spaced apart from each other in the second direction Y, the first channel 1031 may be provided penetrating through the insulating member 13 in the first direction Z, and the first channel 1031 has a larger dimension in a cross section perpendicular to the first direction Z, which facilitates the high-temperature and high-pressure gas's passing through the first channel 1031 to flow to the pressure relief mechanism 123 and thereby to achieve timely pressure relief of the battery cell 10. Also, the ends of the two first walls 1321 in the third direction X may be spaced apart to form the first slot 1021, such that the first slot 1021 has a large dimension, which also facilitates the passing of the high-temperature and high-pressure gas at the side portion of the electrode assembly 11 in the third direction X through the first gap 1011 and the first slot 1021 to enter the first channel 1031, thus facilitating the timely pressure relief of the electrode assembly 11.

In some embodiments, referring to FIGs. 5 and 6 together and in combination with the other figures, the first protrusion 132 further includes a second wall 1322. The second wall 1322 is disposed between the two first walls 1321 and at the side portions of the first walls 1321 in the third direction X. The first walls 1321 and the second wall 1322 define the first channel 1031, and the first slot 1021 is formed in the second wall 1322.

The second wall 1322 refers to a side wall of the first channel 1031 in the third direction X.

A second wall 1322 is disposed at one side of the first wall 1321 in the third direction X. Alternatively, a second wall 1322 is disposed at each of two opposite sides of the first wall 1321 in the third direction X.

The second wall 1322 may abut against the electrode assembly 11 in the first direction Z, or the second wall 1322 may also be spaced apart from the electrode assembly 11 in the first direction Z.

The first slot 1021 is provided penetrating through the second wall 1322 in the third direction X, such that the first slot 1021 is in communication with both the first gap 1011 and the first channel 1031 in the third direction X. Also, in some possible designs, the first slot 1021 is provided with an opening on a side facing the electrode assembly 11 in the first direction Z. In some possible designs, the first slot 1021 is provided with an opening on a side facing away from the electrode assembly 11 in the first direction Z. In some possible designs, no opening is provided on the two opposite sides of the first slot 1021 in the first direction Z.

With the technical solution described above, the second wall 1322 is provided between the two first walls 1321, and the first slot 1021 is formed in the second wall 1322. As such, the insulating film 14 may extend to the second wall 1322 to be fixed to the second wall 1322, such that the insulating film 14 remains in the standing state, thereby maintaining the insulation effect between the electrode assembly 11 and the housing 12.

In some embodiments, referring to FIGs. 5-6 together and in combination with the other figures, the first protrusion 132 further includes a third wall 1323. The third wall 1323 is disposed between the two first walls 1321 and opposite to the pressure relief mechanism 123 in the first direction Z. The first channel 1031 includes a first space 10311 and second slots 10312. The first walls 1321 and the side of the third wall 1323 distal to the electrode assembly 11 in the first direction Z define the first space 10311, and the first space 10311 is in communication with the first slot 1021 and opposite to the pressure relief mechanism 123 in the first direction Z. The second slots 10312 penetrate through the third wall 1323 in the first direction Z and are in communication with the first space 10311.

It may be appreciated that the first walls 1321 are the side walls of the first space 10311 in the second direction Y, the second wall 1322 is the side wall of the first space 10311 in the third direction X, and the third wall 1323 is the side wall of the first space 10311 facing the electrode assembly 11 in the first direction Z, and the first space 10311 is also disposed opposite to the pressure relief mechanism 123 in the first direction Z.

With the technical solution described above, the first protrusion 132 defines the first space 10311 and the second slots 10312, the high-temperature and high-pressure gas generated by the electrode assembly 11 can pass through the second slots 10312 in the first direction Z to enter the first space 10311, and the high-temperature and high-pressure gas at the side portion of the electrode assembly 11 in the third direction X can sequentially pass through the first gap 1011 and the first slot 1021 to enter the first space 10311. As such, the high-temperature and high-pressure gas can be buffered in the first space 10311 and then flow to the pressure relief mechanism 123, allowing the high-temperature and high-pressure gas in the battery cell 10 to rush out through the pressure relief mechanism 123 to realize pressure relief.

In some embodiments, referring to FIGs. 5-8 together and in combination with the other figures, the third wall 1323 is disposed at ends of the first walls 1321 facing the electrode assembly 11 in the first direction Z and is configured to abut against the electrode assembly 11 in the first direction Z.

With the technical solution described above, the third wall 1323 may abut against the electrode assembly 11 in the first direction Z. As such, the area of the first protrusion 132 for contact with the electrode assembly 11 can be increased, such that the first protrusion 132 can abut against the electrode assembly 11 very stably, thus fixing the electrode assembly 11 in the housing 12 and allowing for reduced damages to the electrode assembly 11 caused by the first protrusion 132.

In some embodiments, referring to FIGs. 5 and 6 together and in combination with the other figures, the body part 131 includes a plurality of sub-parts 1311, and the plurality of sub-parts 1311 are sequentially disposed in the second direction Y. Also, the first protrusion 132 is disposed between two adjacent sub-parts 1311.

It may be appreciated that the first protrusion 132 and the plurality of sub-parts 1311 are sequentially disposed in the second direction Y, realizing the effect of disposing the first protrusion 132 and the body part 131 in the second direction Y.

In such a configuration, the first protrusion 132 is disposed in the middle of the body part 131 in the second direction Y, and the first protrusion 132 is thus directly opposite to the middle of the electrode assembly 11 in the second direction Y. In some cases, when the electrode assembly 11 experiences thermal runaway, the high-temperature and high-pressure gas generated by the electrode assembly 11 is concentrated in large amount in the middle of the electrode assembly 11. As such, the high-temperature and high-pressure gas generated by the electrode assembly 11 can quickly flow to the first channel 1031 to be released through the pressure relief mechanism 123. This helps to achieve the effect of timely pressure relief of the battery cell 10.

In some embodiments, the first slot 1021 and the first protrusion 132 satisfy the following relationship:

$$S1 \geq S2 \times 1/6,$$

where on one of the side surfaces of the first protrusion 132 in the third direction X, S1 is the area of the first slot 1021, and S2 is the area of the first protrusion 132.

On one of the side surfaces of the first protrusion 132 in the third direction X, one or more first slots 1021 may be provided. When the number of first slots 1021 is one, S1 is the area of the first slot 1021. When the number of first slots 1021 is plural, S1 is the sum of the areas of the plurality of first slots 1021, i.e., the sum of the areas of all of the first slots 1021 on the side surface.

By setting $S1 \geq S2 \times 1/6$, the area of the first slot 1021 is not too small, such that the first slot 1021 can allow the high-temperature and high-pressure gas to flow through timely, which facilitates the high-temperature and high-pressure gas' entering the first channel 1031 through the first slot 1021 for pressure relief.

It should be noted that the gas pressures and temperatures at the side portion of the electrode assembly 11 in the third direction X and at the first channel 1031 may be measured when the thermal runaway of the battery cell 10 is simulated. When the pressure and temperature at the side portion of the electrode assembly 11 are substantially the same as the other and temperature at the first channel 1031, it can be considered that the first channel 1031 is in communication with the side portion of the electrode assembly 11. By setting $S1 \geq S2 \times 1/6$, the speed of communication between the first channel 1031 and the side portion of the electrode assembly 11 can be increased, and the pressure relief of the side portion of the electrode assembly 11 can be achieved quickly.

In some embodiments, $S1 \geq S2 \times 1/2$.

By setting $S1 \geq S2 \times 1/2$, the first slot 1021 can have a large area proportion on the first protrusion 132, such that the effect of rapid release of the high-temperature and high-pressure gas at the side portion of the electrode assembly 11 to the pressure relief mechanism 123 can be achieved.

In some embodiments, the first protrusion 132 is provided on a side portion of the body part 131 in the second direction Y. In the second direction Y, the first gap 1011 is provided between a side portion of the first protrusion 132 distal to the body part 131 and the housing 12, and the first protrusion 132 is provided with the first slot 1021 at the side portion, where the first direction Z intersects with the second direction Y.

The body part 131 is provided with a first protrusion 132 at one side in the second direction Y, or the body part 131 is provided with a first protrusion 132 at each of two opposite sides in the second direction Y.

The first gap 1011 is provided between a side of the first protrusion 132 distal to the body part 131 in the second direction Y and the housing 12, and the first protrusion 132 is provided with the first slot 1021 at the side distal to the body part 131 in the second direction Y, and the first slot 1021 is in communication with the first gap 1011 in the second direction Y.

In such a configuration, the high-temperature and high-pressure gas on the side portion of the electrode assembly 11 in the second direction Y can sequentially pass through the first gap 1011 and the first slot 1021 to enter the first channel 1031 and thereby to flow to the pressure relief mechanism 123 through the first channel 1031. This enables the effect of timely release of the high-temperature and high-pressure gas at the side portion of the electrode assembly 11 in the second direction Y to achieve timely pressure relief of the electrode assembly 11.

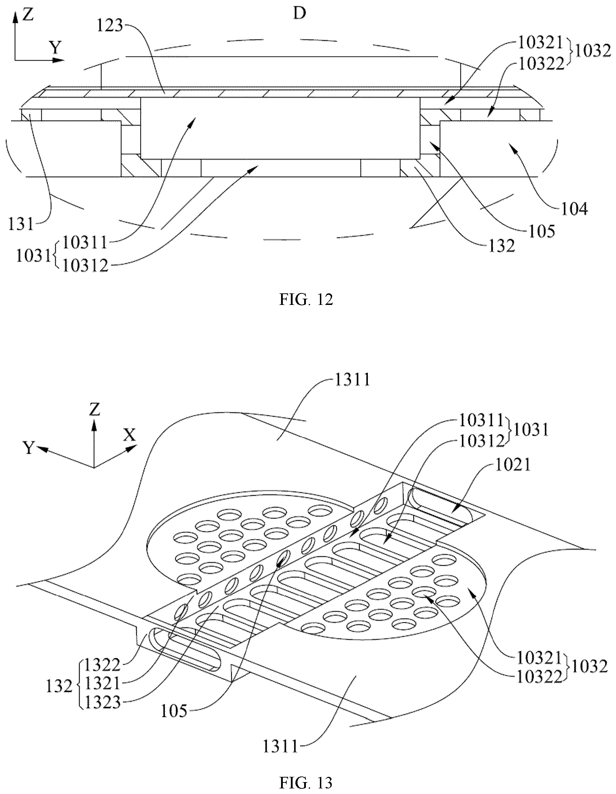

In some embodiments, referring to FIGs. 9-12 together and in combination with the other figures, FIG. 9 shows a schematic perspective view of the insulating member 13 of the battery cell 10 according to some other embodiments of the present application, FIG. 10 is a cross-sectional view of the battery cell 10 in which the insulating member 13 is located in FIG. 9, FIG. 11 is a partial enlarged view of FIG. 10, and FIG. 12 is a partial enlarged view of FIG. 10. The insulating member 13 includes the body part 131. In the first direction Z, the body part 131 is spaced apart from the electrode assembly 11 to form a second space 104, and the second space 104 is in communication with the pressure relief channel 103.

The pressure relief channel 103 may be formed in the body part 131. Alternatively, the pressure relief channel 103 is formed in the first protrusion 132. Alternatively, a pressure relief channel 103 is formed in each of the body part 131 and the first protrusion 132.

In some embodiments, referring to FIGs. 9-12 together and in combination with the other figures, the insulating member 13 further includes a second protrusion 133. In the first direction Z, the second protrusion 133 is disposed on the side of the body part 131 facing the electrode assembly 11. The pressure relief gap 101 includes a second gap 1012, and the pressure relief slot 102 includes a third slot 1022. In the direction intersecting with the first direction Z, the second protrusion 133 is spaced apart from the housing 12 to form the second gap 1012. In the direction intersecting with the first direction Z, the second protrusion 133 is provided with the third slot 1022. The third slot 1022 is in communication with the second gap 1012 and the second space 104.

The above-mentioned "direction intersecting with the first direction Z" may be the second direction Y or the third direction X. Specifically, in some possible designs, the above third slot 1022 is formed in the side portion of the second protrusion 133 in the second direction Y, the side portion of the second protrusion 133 in the second direction Y is spaced apart from the housing 12 to form the above second gap 1012, the third slot 1022 is in communication with the second gap 1012 in the second direction Y, and the third slot 1022 is in communication with the second space 104. Based on this, the high-temperature and high-pressure gas at the side portion of the electrode assembly 11 in the second direction Y can sequentially pass through the corresponding second gap 1012 and third slot 1022 to flow to the second space 104. In some possible designs, the above third slot 1022 is formed in the side portion of the second protrusion 133 in the third direction X, and the side portion of the second protrusion 133 in the third direction X is spaced apart from the housing 12 to form the above second gap 1012. The above second gap 1012 is in communication with the above third slot 1022 in the third direction X, and the third slot 1022 is in communication with the second space 104. Based on this, the high-temperature and high-pressure gas on the side portion of the electrode assembly 11 in the third direction X can sequentially pass through the corresponding second gap 1012 and third slot 1022 to flow to the second space 104.

The second protrusion 133 may abut against the electrode assembly 11 in the first direction Z, such that the electrode assembly 11 can be fixed in the battery cell 10. The second protrusion 133 may also be spaced apart from the electrode assembly 11 in the first direction Z, such that a gap between the second protrusion 133 and the electrode assembly 11 allows the high-temperature and high-pressure gas to pass through to enter the second space 104 and thus flow to the pressure relief channel 103 for pressure relief through the pressure relief mechanism 123.

With the technical solution described above, in the case where there is high-temperature and high-pressure gas at the side portion of the electrode assembly 11 in the direction intersecting with the first direction Z, the high-temperature and high-pressure gas can sequentially pass through the first gap 1011 and the second gap 1012 to flow to the pressure relief channel 103, or can pass through the second gap 1012 and the third slot 1022 to flow to the second space 104 and then to the pressure relief channel 103, thus being released to the pressure relief mechanism 123. This helps to achieve the effect of timely pressure relief of the electrode assembly 11.

In some embodiments, referring to FIGs. 9-13 together and in combination with the other figures, FIG. 13 is a partial enlarged view of FIG. 9. The insulating member 13 includes the body part 131 and the first protrusion 132, and the first protrusion 132 and the body part 131 are sequentially disposed in the second direction Y. In the first direction Z, the first protrusion 132 extends beyond the body part 131 in the direction towards the electrode assembly 11. In the first direction Z, the body part 131 is spaced apart from the electrode assembly 11 to form the second space 104, and the second space 104 is in communication with the pressure relief channel 103. The pressure relief channel 103 includes the first channel 1031. The first channel 1031 is provided in the first protrusion 132 and disposed opposite to the pressure relief mechanism 123. The first protrusion 132 is provided with fourth slots 105 at the side portion in the second direction Y, and the fourth slots 105 are in communication with the second space 104 and the first channel 1031. The first direction Z intersects with the second direction Y.

The second space 104 referred to in this embodiment is the same as the second space 104 referred to in the above embodiments, and both of the spaces are formed by the body part 131's being spaced part from the electrode assembly 11 in the first direction Z.

The first protrusion 132 and the body part 131

are sequentially disposed in the second direction Y, and the second protrusion 133 is disposed on the side of the body part 131 facing the electrode assembly 11 in the first direction Z. As such, the first protrusion 132 is spaced apart from the second protrusion 133 in the second direction Y, and the first protrusion 132 and the second protrusion 133 have the second space 104 therebetween.

With the technical solution described above, the high-temperature and high-pressure gas at the side portion of the electrode assembly 11 can flow to the third slot 1022 of the second protrusion 133 through the second gap 1012 between the second protrusion 133 and the housing 12 to flow to the second space 104 and thus to the first channel 1031 through the fourth slots 105 in communication with the second space 104, such that the gas can flow to the pressure relief mechanism 123 to realize the timely release of the high-temperature and high-pressure gas at the side portion of the electrode assembly 11. Also, the high-temperature and high-pressure gas at the side portion of the electrode assembly 11 can directly enter the second space 104 and thus flow to the first channel 1031 through the fourth slots 105 in communication with the second space 104, such that the gas can flow to the pressure relief mechanism 123 to realize the timely release of the high-temperature and high-pressure gas at the side portion of the electrode assembly 11. In such a configuration, the high-temperature and high-pressure gas at the side portion of the electrode assembly 11 in the direction intersecting with the first direction Z can flow to the second space 104 through a plurality of pathways, and thus flow to the first channel 1031 through the fourth slots 105 to be released through the pressure relief mechanism 123, such that the battery cell 10 has a plurality of channels that can release the high-temperature and high-pressure gas, which contributes to the timely pressure relief of the battery cell 10.

In some embodiments, referring to FIGs. 9-13 together and in combination with the other figures, the insulating member 13 includes the body part 131, and the body part 131 is spaced apart from the electrode assembly 11 in the first direction Z to form the second space 104. The pressure relief channel 103 includes the second channel 1032, and the second channel 1032 includes a fifth groove 10321 and sixth slots 10322. The fifth groove 10321 is provided on the side of the body part 131 distal to the electrode assembly 11 in the first direction Z and is opposite to the pressure relief mechanism 123. The sixth slots 10322 penetrate through the bottom of the fourth slot 105 in the first direction Z and are in communication with the second space 104.

In such a configuration, the high-temperature and high-pressure gas in the second space 104 may not only flow to the first channel 1031 through the fourth slots 105, but also flow to the sixth slots 10322 through the fifth groove 10321, and is then released to the pressure relief mechanism 123. In this way, the high-temperature and high-pressure gas in the second space 104 can be released to the pressure relief mechanism 123 through a plurality of pathways, thus facilitating the timely pressure relief of the battery cell 10.

In some embodiments, the fifth groove 10321 of the second channel 1032 is in communication with the first space 10311 of the first channel 1031, thus facilitating the buffer and release of the high-temperature and high-pressure gas.

Based on the above concept, referring to FIG. 2, an embodiment of the present application further provides a battery 100. The battery 100 includes a battery cell 10. The battery cell 10 in this embodiment is the same as the battery cell 10 in the previous embodiment. Reference may be made to the relevant descriptions of the battery cell 10 in the previous embodiment for details, which are not described again herein.

According to the battery 100 provided in the embodiment of the present application, the use of the battery cell 10 referred to above can ameliorate the problem of difficulties in timely releasing the high-temperature and high-pressure gas from the electrode assembly 11 caused by the insulating member 13 blocking the high-temperature and high-pressure gas, so as to ameliorate the problem of damage or even explosion of the electrode assembly 11 caused by the difficulties in timely pressure relief of the electrode assembly 11, thereby imparting the battery 100 the advantage of timely pressure relief.

Based on the above concept, referring to FIG. 1, an embodiment of the present application further provides an electric device. The electric device includes the battery cell 10 or the battery 100. The battery cell 10 and the battery 100 in this embodiment are the same as the battery cell 10 and the battery 100 in the previous embodiment. Reference may be made to the relevant descriptions of the battery cell 10 and the battery 100 in the previous embodiment for details, which are not described again herein.

According to the electric device provided in the embodiment of the present application, the use of the battery cell 10 or battery 100 referred to above can ameliorate the problem of difficulties in timely releasing the high-temperature and high-pressure gas from the electrode assembly 11 caused by the insulating member 13 blocking the high-temperature and high-pressure gas, so as to ameliorate the problem of damage or even explosion of the electrode assembly 11 caused by the difficulties in timely pressure relief of the electrode assembly 11, thereby imparting the battery 100 the advantage of timely pressure relief.

As an embodiment of the present application, as shown in FIGs. 5-8, the battery cell 10 includes a housing 12, an electrode assembly 11, and an insulating member 13. The housing 12 is provided with a pressure relief mechanism 123 at an end in the first direction Z, and the insulating member 13 is disposed at an end of the electrode assembly 11 proximal to the pressure relief mechanism 123. The insulating member 13 includes a body part 131 and a first protrusion 132. The first protrusion 132 is disposed in the middle of the body part 131 in the second direction Y and is sequentially disposed with the body part 131 in the second direction Y. In the third direction X, a side portion of the first protrusion 132 is spaced apart from the housing 12 to form a first gap 1011, and the first protrusion 132 is provided, at the side portion, a first slot 1021 in communication with the first gap 1011. A first channel 1031 in communication with the first slot 1021 penetrates through the first protrusion 132 in the first direction Z. Based on this, the high-temperature and high-pressure gas at the side portion of the electrode assembly 11 in the third direction X can sequentially pass through the first gap 1011 and the first slot 1021 to enter the first channel 1031 and thereby to be released to the pressure relief mechanism 123.

As shown in FIGs. 9-13, in the first direction Z, the body part 131 is spaced apart from the electrode assembly 11 to form a second space 104. The first protrusion 132 is provided with fourth slots 105 at the side portion in the second direction Y, and the fourth slots 105 are in communication with the first channel 1031. A second channel 1032 is formed in the body part 131, and the second channel 1032 includes a fifth groove 10321 and sixth slots 10322. In the first direction Z, the body part 131 is provided with the fifth groove 10321 at the side distal to the electrode assembly 11, and the sixth slots 10322 are formed in the bottom of the fifth groove 10321 by penetrating through it in the first direction Z and the sixth slots 10322 are in communication with the second space 104. Based on this, the high-temperature and high-pressure gas at the side portion of the electrode assembly 11 in the third direction X can flow to the second space 104 through the gap between the electrode assembly 11 and the housing 12, and can thus sequentially pass through the fourth slots 105 and the first channel 1031 to be released to the pressure relief mechanism 123, or can sequentially pass through the fifth groove 10321 and the sixth slots 10322 to be released to the pressure relief mechanism 123.

As shown in FIGs. 9-13, the insulating member 13 further includes a second protrusion 133 disposed on the side of the body part 131 facing the electrode assembly 11 in the first direction Z. The second protrusion 133 is spaced apart from the first protrusion 132 in the second direction Y, and the first protrusion 132 and the second protrusion 133 have the above second space 104 therebetween. A third slot 1022 is provided penetrating through the second protrusion 133 in the second direction Y, and the side portion of the second protrusion 133 in the second direction Y is spaced apart from the housing 12 to form a second gap 1012. The second gap 1012 is in communication with the third slot 1022, and the third slot 1022 is in communication with the second space 104. Based on this, the high-temperature and high-pressure gas at the side portion of the electrode assembly 11 in the second direction Y can sequentially pass through the second gap 1012 and third slot 1022 to flow to the second space 104, and can thus sequentially pass through the fourth slots 105 and the first channel 1031 to be released to the pressure relief mechanism 123, or can sequentially pass through the fifth groove 10321 and the sixth slots 10322 to be released to the pressure relief mechanism 123.

The above are only optional embodiments of the present application and are not intended to limit the present application. For those skilled in the art, the present application can be modified and varied. Any modification, equivalent substitution, improvement, and the like made within the spirit and principle of the present application shall all fall within the scope of the claims of the present application.

**Claims**

1. A battery cell (10), comprising:

a housing (12) provided with a pressure relief mechanism (123) at an end in a first direction (Z);
an electrode assembly (11) disposed in the housing (12); and
an insulating member (13) disposed in the housing (12) and located at an end of the electrode assembly (11) proximal to the pressure relief mechanism (123), wherein in a direction intersecting with the first direction (Z), a pressure relief gap (101) is provided between a side portion of the insulating member (13) and the housing (12), the insulating member (13) is provided, at the side portion, with a pressure relief slot (102) in communication with the pressure relief gap (101), and the housing (12) is provided therein with a pressure relief channel (103) in communication with the pressure relief slot (102) and disposed opposite to the pressure relief mechanism (123).

2. The battery cell (10) according to claim 1, wherein the pressure relief channel (103) is provided penetrating through the insulating member (13) in the first direction (Z).

3. The battery cell (10) according to claim 1 or 2, wherein the insulating member (13) comprises a body part (131) and a first protrusion (132) connected to the body part (131), wherein the first protrusion (132) extends beyond the body part (131) in the first direction (Z); the pressure relief gap (101) comprises a first gap (1011) provided between the first protrusion (132) and the housing (12), the pressure relief slot (102) comprises a first slot (1021) provided in the first protrusion (132) and in communication with the first gap (1011), the pressure relief channel (103) comprises a first channel (1031) provided in the first protrusion (132), and the first channel (1031) is in

16

communication with the first slot (1021) and is opposite to the pressure relief mechanism (123).

4. The battery cell (10) according to claim 3, wherein the first protrusion (132) and the body part (131) are sequentially disposed in a second direction (Y); in a third direction (X), the first gap (1011) is provided between a side portion of the first protrusion (132) and the housing (12), and the first protrusion (132) is provided with the first slot (1021) at the side portion; the first direction (Z), the second direction (Y), and the third direction (X) intersect with each other, and the first direction (Z), the second direction (Y), and the third direction (X) are not in a same plane.

5. The battery cell (10) according to claim 4, wherein the first protrusion (132) comprises:
two first walls (1321) spaced apart from each other on the body part (131) in the second direction (Y) to form the first channel (1031), the first slot (1021) being formed in side portions of the two first walls in the third direction (X).

6. The battery cell (10) according to claim 5, wherein the first protrusion (132) further comprises:
a second wall (1322) disposed between the two first walls (1321) and at the side portions of the first walls (1321) in the third direction (X), the first walls (1321) and the second wall (1322) defining the first channel (1031), and the first slot (1021) being formed in the second wall (1322).

7. The battery cell (10) according to claim 6, wherein the first protrusion (132) further comprises a third wall (1323), the third wall (1323) being disposed between the two first walls (1321) and opposite to the pressure relief mechanism (123); the first channel (1031) comprises:

a first space (10311) in communication with the first slot (1021) and opposite to the pressure relief mechanism (123), the first walls (1321) and a side of the third wall (1323) distal to the electrode assembly (11) in the first direction (Z) defining the first space (10311); and
second slots (10312) penetrating through the third wall (1323) in the first direction (Z) and in communication with the first space (10311).

8. The battery cell (10) according to claim 7, wherein the third wall (1323) is disposed at ends of the first walls (1321) facing the electrode assembly (11) in the first direction (Z) and is configured to abut against the electrode assembly (11) in the first direction (Z).

9. The battery cell (10) according to any one of claims 4-8, wherein the body part (131) comprises a plurality of sub-parts (1311) sequentially disposed in the second direction (Y), and the first protrusion (132) is disposed between two adjacent sub-parts (1311).

10. The battery cell (10) according to any one of claims 4-9, wherein the first slot (1021) and the first protrusion (132) satisfy the following relationship:

$$S1 \geq S2 \times 1/6,$$

wherein on one of side surfaces of the first protrusion (132) in the third direction (X), S1 is an area of the first slot (1021), and S2 is an area of the first protrusion (132).

11. The battery cell (10) according to claim 10, wherein $S1 \geq S2 \times 1/2$.

12. The battery cell (10) according to any one of claims 3-11, wherein the first protrusion (132) is disposed on a side portion of the body part (131) in the second direction (Y); in the second direction (Y), the first gap (1011) is provided between a side portion of the first protrusion (132) distal to the body part (131) and the housing (12), and the first protrusion (132) is provided with the first slot (1021) at the side portion; the first direction (Z) intersects with the second direction (Y).

13. The battery cell (10) according to any one of claims 1-12, wherein the insulating member (13) comprises the body part (131) and a second protrusion (133); in the first direction (Z), the second protrusion (133) is disposed on a side of the body part (131) facing the electrode assembly (11), and the body part (131) is spaced apart from the electrode assembly (11) to form a second space (104) in communication with the pressure relief channel (103); the pressure relief gap (101) comprises a second gap (1012), and the pressure relief slot (102) comprises a third slot (1022) in communication with the second gap (1012); in a direction intersecting with the first direction (Z), the second protrusion (133) is spaced apart from the housing (12) to form the second gap (1012), and the second protrusion (133) is provided with the third slot (1022) in communication with the second space (104).

14. The battery cell (10) according to any one of claims 1-13, wherein the insulating member (13) comprises the body part (131) and the first protrusion (132), and the first protrusion (132) and the body part (131) are sequentially disposed in the second direction (Y); in the first direction (Z), the first protrusion (132) extends beyond the body part (131) toward the electrode assembly (11), and the body part (131) is spaced apart from the electrode assembly (11) to form the second space (104) in communication with the pressure relief channel (103); the pressure relief channel (103) comprises the first channel (1031) provided in the first protrusion (132) and opposite to the pressure relief mechanism (123), and the first protrusion (132) is provided, at a side portion in the second direction (Y), with fourth slots (105) in communication with the second space (104) and the first channel (1031); the first direction (Z) intersects with the second direction (Y).

15. The battery cell (10) according to any one of claims 1-14, wherein the insulating member (13) comprises the body part (131), and the body part (131) is spaced apart from the electrode assembly (11) in the first direction (Z) to form the second space (104); the pressure relief channel (103) comprises a second channel (1032), and the second channel (1032) comprises:

a fifth groove (10321) provided on a side of the body part (131) distal to the electrode assembly (11) in the first direction (Z) and opposite to the pressure relief mechanism (123); and
sixth slots (10322) penetrating through a bottom of the fifth groove (10321) in the first direction (Z) and in communication with the second space (104).

16. A battery (100), comprising the battery cell (10) according to any one of claims 1-15.

17. An electric device, comprising the battery cell (10) according to any one of claims 1-15 or the battery (100) according to claim 16.

FIG. 1

FIG. 2

FIG. 3

FIG. 4

FIG. 5

FIG. 6

A–A

B

121
122
123 } 12

13

11

Z
X

FIG. 7

FIG. 8

FIG. 9

FIG. 10

FIG. 11

FIG. 12

FIG. 13

## INTERNATIONAL SEARCH REPORT

International application No.

**PCT/CN2023/109917**

**A. CLASSIFICATION OF SUBJECT MATTER**

H01M50/367(2021.01)i; H01M50/593(2021.01)i; H01M50/586(2021.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; DWPI; USTXT; EPTXT; WOTXT; ISI; CNKI: 宁德时代, 盖, 绝缘件, 绝缘板, 侧部, 侧边, 侧面, 泄压, 气, 排, 通道, 槽, lid, cover, insulat+, side, pressure, relief, gas, vent+, exhaust+, channel, groove, slot

**C. DOCUMENTS CONSIDERED TO BE RELEVANT**

| Category* | Citation of document, with indication, where appropriate, of the relevant passages | Relevant to claim No. |
|---|---|---|
| X | CN 115764150 A (XIAMEN HITHIUM ENERGY STORAGE TECHNOLOGY CO., LTD.) 07 March 2023 (2023-03-07) description, paragraphs [0053]-[0085], and figures 1-5 | 1, 2, 16, 17 |
| Y | CN 115764150 A (XIAMEN HITHIUM ENERGY STORAGE TECHNOLOGY CO., LTD.) 07 March 2023 (2023-03-07) description, paragraphs [0053]-[0085], and figures 1-5 | 3-15 |
| Y | CN 216872217 U (NINGDE CONTEMPORARY AMPEREX TECHNOLOGY CO., LTD.) 01 July 2022 (2022-07-01) description, paragraphs [0049]-[0075], and figures 3-5 | 3-15 |
| X | CN 218070113 U (XIAMEN HITHIUM ENERGY STORAGE TECHNOLOGY CO., LTD.) 16 December 2022 (2022-12-16) description, paragraphs [0069]-[00126], and figures 1-5 | 1, 2, 16, 17 |
| Y | CN 218070113 U (XIAMEN HITHIUM ENERGY STORAGE TECHNOLOGY CO., LTD.) 16 December 2022 (2022-12-16) description, paragraphs [0069]-[00126], and figures 1-5 | 3-15 |

☑ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **29 November 2023** | **05 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/109917** |

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| Y | CN 217544884 U (NINGDE CONTEMPORARY AMPEREX TECHNOLOGY CO., LTD.) 04 October 2022 (2022-10-04) description, paragraphs [0083]-[0156], and figures 3-8 | | 3-15 |
| A | CN 211404606 U (CHINA AVIATION LITHIUM BATTERY (LUOYANG) CO., LTD.) 01 September 2020 (2020-09-01) entire document | | 1-17 |
| A | US 2011097613 A1 (KIM YONG-SAM et al.) 28 April 2011 (2011-04-28) entire document | | 1-17 |

Form PCT/ISA/210 (second sheet) (July 2022)

**INTERNATIONAL SEARCH REPORT**
Information on patent family members

International application No.

**PCT/CN2023/109917**

| Patent document cited in search report | | | Publication date (day/month/year) | Patent family member(s) | | | Publication date (day/month/year) |
|---|---|---|---|---|---|---|---|
| CN | 115764150 | A | 07 March 2023 | None | | | |
| CN | 216872217 | U | 01 July 2022 | None | | | |
| CN | 218070113 | U | 16 December 2022 | None | | | |
| CN | 217544884 | U | 04 October 2022 | None | | | |
| CN | 211404606 | U | 01 September 2020 | EP | 3883046 | A1 | 22 September 2021 |
| | | | | US | 2021296625 | A1 | 23 September 2021 |
| US | 2011097613 | A1 | 28 April 2011 | KR | 20110045304 | A | 04 May 2011 |
| | | | | KR | 101084055 | B1 | 16 November 2011 |
| | | | | US | 8709630 | B2 | 29 April 2014 |

Form PCT/ISA/210 (patent family annex) (July 2022)

**EP 4 607 679 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202321141617